# EUROPÄISCHE PATENTSCHRIFT

(11) **EP 0 922 868 B1**
(45) Veröffentlichungstag und Bekanntmachung des Hinweises auf die Patenterteilung: **05.12.2001**
(21) Anmeldenummer: 98119567.0
(22) Anmeldetag: 16.10.1998
(51) Int. Cl.: F16C 11/06

(54) **Axialgelenk**
Ball joint
Articulation à rotule

(30) Priorität: 11.12.1997 DE 19755020
(43) Veröffentlichungstag der Anmeldung: 16.06.1999
(73) Patentinhaber: ZF Lemförder Metallwaren AG, 49448 Lemförde (DE)
(72) Erfinder: Ungruh, Rainer, 48477 Hörstel (DE); Schmudde, Norbert, 49080 Osnabrück (DE); Hüneke, Gerhard, 49134 Wallenhorst (DE); Müller, Dieter, 49401 Damme (DE)

(56) Entgegenhaltungen:
- EP-A- 0 771 716
- EP-B- 0 026 864
- DE-A- 19 610 886
- US-A- 4 606 668
- US-A- 5 188 477

## Beschreibung

Die Erfindung betrifft ein Axialgelenk, insbesondere ein Axialgelenk der Fahrwerktechnik, insbesondere im Bereich der Lenkung und Schaltung eines Fahrzeuges.

Ein ähnliches Axialgelenk ist aus der EP 0 026 864 B1 bekannt. In dieser Patentschrift wird ein Axialgelenk offenbart dessen Aufgabe es ist, gegenüber relativ kleinen Bewegungen einen geringen Reibungswiderstand und gegenüber großen Bewegungen einen relativ höheren Reibungswiderstand aufzuweisen. Dieses Axialgelenk besteht aus einem zweiteiligen metallischen Gehäuse mit einem zylindrisch sphärischen Innenraum und zwei Öffnungen entlang der zylindrischen Achse. Innerhalb des Gehäuses befindet sich ein Kugelzapfen mit einer Gelenkkugel und einem Zapfen, wobei die Gelenkkugel von dem Gehäuse umschlossen ist und der Zapfen durch die kleinere der Öffnungen, die sich im Bereich des sphärischen Teils des Gehäuses befindet, aus dem Gehäuse herausragt. Im zylindrischen Bereich des Gehäuses ist eine große Öffnung angebracht, durch die der Kugelzapfen in das Innere des Gehäuses eingeführt werden kann. Zwischen dem Gehäuse und dem Kugelzapfen ist über einen wesentlichen Teil der Fläche eine zweiteilige Lagerschale vorgesehen. Die Lagerschale sorgt für eine leichte Beweglichkeit des Kugelzapfens, beziehungsweise in der dort dargestellten Ausführung über eine unterschiedliche Beweglichkeit, je nach Auslenkung des Kugelzapfens. Der eine Teil der Lagerschale ist sowohl innen als auch außen sphärisch ausgeführt, während der zweite Teil der Lagerschale im Außenbereich zylindrisch, entsprechend dem Metallgehäuse, geformt ist und im Innenbereich eine sphärische Ausbildung, entsprechend der Oberfläche der Gelenkkugel des Kugelzapfens, aufweist.

Bei der Herstellung des Axialgelenkes wird nach dem Einsetzen des sphärischen Teils der Lagerschale in das Gehäuse der Kugelzapfen eingeführt. Darauf wird in den zylindrischen Teil die zylindrisch sphärische Lagerschale auf den Kugelzapfen aufgesetzt und ein im wesentlichen ebener Deckel so auf den zylindrischen Teil des Gehäuses aufgepaßt, daß er die beiden Lagerschalen fest in das Gehäuse und um die Gelenkkugel des Kugelzapfens preßt.

Ein Nachteil dieser bekannten Ausführungsform eines Axialgelenkes besteht darin, daß die Herstellung dieses aus mehreren Teilen bestehenden Axialgelenkes relativ aufwendig ist.
Weiterhin ist es bei dieser Konstruktion problematisch, auf der dem Zapfen des Kugelgelenkes gegenüberliegenden Seite eine gute Verbindung des Gehäuses mit einem Fahrzeugteil herzustellen.

Aus der DE 196 10 886 A1 geht ein Axialgelenk für den Fahrwerksbau, insbesondere für den Lenkungs- und Schaltungsbau hervor, dass ein metallisches, einstückig ausgeführtes Gehäuse mit einer Öffnung und einem Innenraum aufweist. Ein Kugelzapfen besteht aus einer Gelenkkugel und einem Zapfen, wobei die Gelenkkugel größtenteils von dem Gehäuse umschlossen ist und in dem Übergangsbereich zwischen Gelenkkugel und Zapfen ein Zapfenhals mit einem gegenüber dem Zapfen verringerten Durchmesser vorhanden ist.
Der Zapfen ragt durch die Öffnung des Gehäuses heraus, sodass nach der Gelenkmontage der Durchmesser der Gelenkkugel wesentlich größer als der Durchmesser der Öffnung des Gehäuses und dieser wesentlich kleiner als die axiale Ausdehnung des Zapfenhalses ist.
Aus der Schrift ist ferner eine aus Kunststoff bestehende Lagerschale zwischen dem Gehäuse und der Gelenkkugel bekannt. Die in DE 196 10 886 A1 offenbarte einteilige Lagerschale wird zur Vermeidung der Beweglichkeit sowie zum Spielausgleich im Axialgelenk mit dem Gehäuse verklebt, was fertigungstechnisch aufwendig ist, Einschränkungen hinsichtlich der Materialwahl der Lagerschale mit sich bringt und zudem aus gesundheitlichen und Umweltaspekten heraus unerwünscht ist.

Die US 5,188,477 A offenbart ebenfalls ein Axialgelenk mit einer einteiligen Lagerschale, die sich über ein zusätzliches elastisches Stützelement gegen die Gehäuseinnenoberfläche abstützt. Das Stützelement dient zur Erreichung eines Axialgelenkes ohne Spiel zwischen den Bauteilen, weil somit eine Vorspannung innerhalb des Axialgelenkes erreicht wird.

Technische Problemstellung ist es vorliegend, ein spielfreies Axialgelenk herzustellen, dessen Aufbau insgesamt vereinfacht ist.

Weiterhin besteht die Aufgabe, ein einfaches Herstellungsverfahren für dieses erfindungsgemäße Axialgelenk zu beschreiben.

Die Aufgabe der Erfindung wird durch die Merkmale der unabhängigen Ansprüche gelöst.

Demgemäß wird vorgeschlagen, ein Axialgelenk mit einem einstückigen, metallischen Gehäuse mit einer Öffnung und einem Innenraum sowie einem Kugelzapfen mit einer Gelenkkugel auszustatten, wobei der Kugelzapfen zwischen seinem Zapfen und der Gelenkkugel einen Zapfenhals aufweist und die Gelenkkugel größtenteils von dem Gehäuse umschlossen ist, der Zapfen ferner durch die Öffnung des Gehäuses herausragt und mindestens eine, im wesentlichen aus Kunststoff ausgebildete Lagerschale zwischen dem Gehäuse und der Gelenkkugel angeordnet ist. Diese einstückige Ausführung des Gehäuses birgt den Vorteil in sich, daß gegenüber dem Stand der Technik eine wesentlich einfachere und kostengünstigere Herstellung ermöglicht wird.Ferner kann das Axialgelenk derart gestaltet werden, daß nach der Montage des Axialgelenkes der Durchmesser der Gelenkkugel wesentlich größer als der Durchmesser der Öffnung des Gehäuses und dieser wiederum wesentlich kleiner als die axiale Ausdehnung des Zapfenhalses ist. Hierdurch wird erreicht, daß ein bisheriger Schwachpunkt bei Axialgelenken, nämlich die nur unzureichende Fähigkeit zur Übertragung einer Zugkraft entlang der Achse des Kugelzapfens, verbessert wird. Außerdem wird dadurch erreicht, daß auch die Winkelausschläge des Kugelzapfens im Kugelgelenk vergrößert werden können.
Ein weiterer Vorteil eines erfindungsgemäßen Axialgelenkes besteht darin, die Lagerschale zweiteilig auszuführen und zumindest ein Teil der Lagerschale, vorzugsweise das, der Öffnung des Gehäuses am nächsten liegende, aus Kunststoff/Metall-Verbundwerksstoff auszuführen. Hierdurch wird erreicht, daß eine wesentlich günstigere Produktion möglich ist und daß auch handelsübliche Teile für die Lagerschale, insbesondere für den zylindrischen Bereich, beziehungsweise fiir den ursprünglich zylindrischen Bereich, eingesetzt werden können. Es ergibt sich ferner eine verglichen mit bekannten Axialgelenkausführungen wesentlich höhere Belastbarkeit eines erfindungsgemäßen Gelenkes, sowie eine erhebliche Gewichtsreduzierung und eine verbesserte Temperaturbeständigkeit. Die verbesserte Temperaturbeständigkeit der Mehrstoff-Lagerschale verringert die negativen Einflüsse temperaturbedingter Bauteiltoleranzen, sodaß sich hierdurch ein positiver Einfluß auf die Reibungseigenschaften der Gelenkbauteile einstellt. Es wird eine nahezu konstante Reibung erreicht.

Entsprechend der Erfindung wird das Axialgelenk dadurch hergestellt, daß es durch Kaltverformung eines zunächst zylindrischen Teils des Gehäuses um die Gelenkkugel mit der zwischen dem Gehäuse und der Gelenkkugel angeordneten Lagerschale hergestellt wird. Durch dieses Verfahren ist es in vorteilhafter Weise möglich, ein Axialgelenk mit einem einstückigen Gehäuse herzustellen, das auch Zugkräfte übernehmen kann und bei dem keine Verschweißungen des Gehäuses notwendig sind.

Eine erfindungsgemäße Ausgestaltung des Axialgelenks besteht darin, daß zwischen der Lagerschale und dem Gehäuse ein Dämpfungsring eingesetzt wird, der beispielsweise aus Gummi oder einem anderen Elastomer bestehen kann. Mit Hilfe dieses Dämpfungsringes wird eine mögliche Vibrationsübertragung von der Lagerschale auf den Kugelzapfen und umgekehrt reduziert. Außerdem erzeugt ein derartiger Dämpfungsring als Nebeneffekt eine Vorspannung, also ein stetiges Andrücken der Lagerschale an die Gelenkkugel, so daß Vibrationen, die durch ein unerwünschtes Spiel im Axialgelenk entstehen könnten, vermieden werden.

In einer weiteren Ausführung des Axialgelenkes ist vorgesehen, daß an dem Gehäuse, das erfindungsgemäß einstückig ausgeführt ist, ein Gehäusezapfen vorgesehen ist.
Beispielsweise kann dieser Gehäusezapfen gegenüberliegend zur Öffnung des Gehäuses, das heißt damit gegenüberliegend zu dem herausstehenden Zapfen des Kugelzapfens, angebracht werden. Hierdurch ist eine einfache Verbindung des Kugelgelenkes mit einem Fahrzeugteil möglich. Zum Beispiel kann der Gehäusezapfen auch mit einer Anschlußkontur, wie einem Gewinde, versehen werden, so daß das Axialgelenk direkt in eine andere Gewindebohrung eingeschraubt werden kann.

Gemäß einem anderen Gedanken der Erfindung wird ein Verfahren zur Herstellung eines Axialgelenkes mit den folgenden Verfahrensschritten aufgezeigt:
1. Einsetzen der zwei Teile einer, zu einem wesentlichen Teil zylindrisch geformten und im wesentlichen aus Kunststoff bestehenden zweiteiligen Lagerschale in ein ebenfalls zu einem wesentlichen Teil zylindrisches, metallisches und einstückiges Gehäuse, das auf einer Seite eine Öffnung aufweist,
2. Einsetzen einer, vorzugsweise metallischen Gelenkkugel eines Kugelzapfens in den Hohlraum der Lagerschale und
3. Kaltverformen eines wesentlichen, zylindrischen Teiles des Gehäuses. So daß sich ein wesentlicher Teil des zunächst zylindrischen Teiles der Lagerschale und des zunächst zylindrischen Teiles des Gehäuses der Außenkontur der Gelenkkugel anpaßt.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den durch die Ansprüche definierten Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen.

Die Erfindung soll nun anhand der Ausführungsbeispiele und den Zeichnungen näher erläutert werden.

Es zeigen:
- Figur 1:: Axialgelenk ohne Dämpfungsring vor der Verformung;
- Figur 2:: Axialgelenk ohne Dämpfungsring nach der Kaltverformung;
- Figur 3:: Fertiges Axialgelenk mit Dämpfungsring.

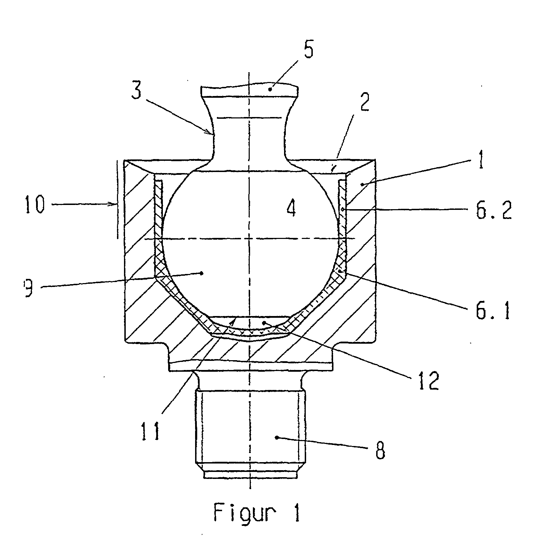

Die Figur 1 zeigt einen Querschnitt durch ein im Herstellungsprozeß befindliches Axialgelenk. Das Axialgelenk weist ein metallisches Gehäuse 1 auf, das über einen Innenraum verfügt, der einen zylindrischen Abschnitt, einen konischen Abschnitt mit einem Winkel von etwa 45° und einen flach-konischen Abschnitt aufweist. In diesem Innenraum 9 ist eine Lagerschale 6 eingelegt, die aus zwei Teilen 6.1 und 6.2 besteht. Der Teil 6.1 besteht vollständig aus Kunststoff, beispielsweise aus Teflon. Der zylindrische Teil 6.2 ist als zylindrische Buchse, aus einem Metall/Kunststoff-Verbundwerkstoff, ausgebildet. In die Lagerschale ist ein, vorzugsweise metallischer, Kugelzapfen 3 eingesetzt, so daß die Gelenkkugel 4, über einen weiten Bereich ihrer Oberfläche, an der Innenseite der Lagerschale 6 anliegt.

Beim Herstellungsprozeß dieses Axialgelenks wird ein wesentlicher Abschnitt 10 des zylindrischen Gehäuses 1 durch Kaltverformung an die innenliegende Gelenkkugel 4 angepreßt.

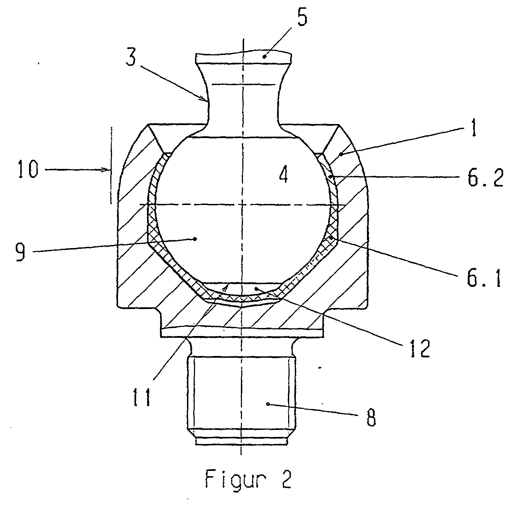

Die Figur 2 zeigt das fertige Axialgelenk nach der Kaltverformung des metallischen Gehäuses. Mit der Verformung des Gehäuses 1 wird auch eine Verformung des innenliegenden, zylindrischen Teils 6.2 der Lagerschale bewirkt, so daß die Gelenkkugel im fertigen Axialgelenk mit ihrer Oberfläche an der Innenfläche der Lagerschale, zumindest über einen wesentlichen Bereich hinweg, anliegt.

Durch die Kaltverformung des Gehäuses 1 wird die ursprünglich große Öffnung 2 des Gehäuses, durch welche die Gelenkkugel 4 des Kugelzapfens 3 in den Innenraum des Gehäuses eingesetzt wird, verkleinert, so daß im fertigen Zustand des Axialgelenkes der Durchmesser der Öffnung 2 kleiner ist als der Durchmesser der Gelenkkugel 4. Auf diese Weise ist es nun möglich, mit diesem erfindungsgemäßen Axialgelenk auch verhältnismäßig große Zugkräfte in Richtung der Längsachse des Axialgelenks zu übertragen.

In den Figuren 1 und 2 ist an der Bodenseite des Gehäuses 1 ein Gehäusezapfen 8 angebracht, mit dem das erfindungsgemäße Kugelgelenk auf einfache Weise mit anderen Fahrzeugteilen verbunden werden kann. Wird der Gehäusezapfen 8 mit einem Gewinde versehen, so kann das gesamte Kugelgelenk auf einfache Weise in eine entsprechende Gewindebohrung eines anderen Fahrzeugteiles eingeschraubt werden.

Die Gelenkkugel 4 weist auf ihrer Unterseite eine Abplattung 11 auf, die zusammen mit der gekrümmt verlaufenden Lagerschale 6.1 einen Hohlraum 12 bildet, der beispielsweise mit einem Schmiermittel gefüllt werden kann.

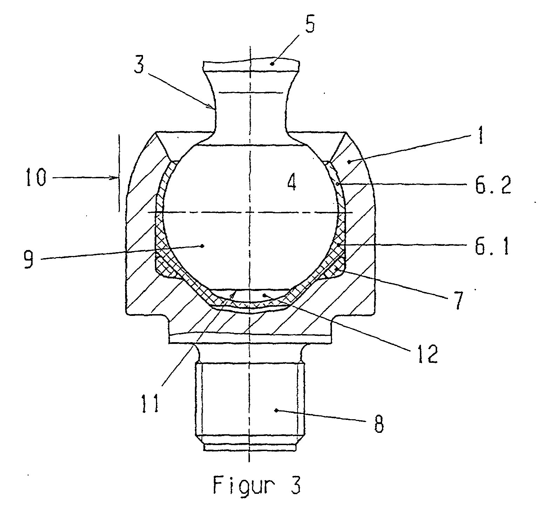

In der Figur 3 ist ein Querschnitt durch ein erfindungsgemäßes Axialgelenk im fertiggestellten Zustand gezeigt. Zum Unterschied dem in den Figuren 1 und 2 gezeigten Axialgelenk weist dieses Axialgelenk einen zusätzlichen, innenliegenden Absatz auf, in den ein Dämpfungsring 7 eingesetzt ist. Dieser Dämpfungsring 7 bewirkt eine zusätzliche Dämpfung und Vorspannung zwischen der Lagerschale 6 und dem Außengehäuse 1.

Der Herstellungsprozeß für dieses Kugelgelenk entspricht im wesentlichen dem Herstellungsprozeß des Kugelgelenks der Figuren 1 und 2.

Mit dieser Erfindung wird nun ein Axialgelenk zur Verfügung gestellt, das auf einfache und damit kostengünstige Art und Weise hergestellt werden kann. Weiterhin ist es nun auch möglich bei diesem erfindungsgemäßen Kugelgelenk einen Zapfen zur Verbindung mit einem anderen Fahrzeugteil auf der dem Kugelzapfen gegenüberliegenden Seite auf einfache Weise am Gehäuse anzubringen. Auch ist es hiermit nun möglich, relativ hohe Zugkräfte entlang der Längsachse des Axialgelenkes zu übertragen und damit neue konstruktive Wege zu beschreiten.

### Bezugszeichenliste

- 1: Gehäuse
- 2: Öffnung
- 3: Kugelzapfen
- 4: Gelenkkugel
- 5: Zapfen
- 5.1: Zapfenhals
- 6: Lagerschale
- 6.1: zylindrisch/sphärischer Teil der Lagerschale aus Kunststoff
- 6.2: kaltverformter Teil der Lagerschale aus Metal/Kunststoff-Verbundwerkstoff
- 7: Dämpfungsring
- 8: Gehäusezapfen
- 9: Innenraum
- 10: zylindrischer Abschnitt der Lagerschale
- 11: Abplattung
- 12: Hohlraum

## Patentansprüche

1. Axialgelenk vorzugsweise für den Fahrwerksbau, insbesondere für den Lenkungs- und Schaltungsbau bestehend aus:
- einem metallischen, einstückig ausgeführten Gehäuse (1) mit einer Öffnung (2) und einem Innenraum (9),
- einem Kugelzapfen (3) der eine Gelenkkugel (4) und einen Zapfen (5) aufweist, wobei die Gelenkkugel (4) größtenteils von dem Gehäuse (1) umschlossen ist und in dem Übergangsbereich zwischen Gelenkkugel (4) und Zapfen (5) ein Zapfenhals mit einem gegenüber dem Zapfen (5) verringerten Durchmesser vorhanden ist und der Zapfen (5) durch die eine Öffnung (2) des Gehäuses herausragt, wobei nach der Gelenkmontage der Durchmesser der Gelenkkugel (4) wesentlich größer als der Durchmesser der Öffnung (2) des Gehäuses (1) und dieser wesentlich kleiner als die axiale Ausdehnung des Zapfenhalses ist,
**dadurch gekennzeichnet, daß**
- eine im wesentlichen aus Kunststoff bestehende, zweiteilige Lagerschale (6; 6.1, 6.2) zwischen dem Gehäuse (1) und der Gelenkkugel (4) angeordnet ist,
- zumindest eines der Teile (6.2) dieser Lagerschale (6) aus einem Kunststoff/Metall-Verbundwerkstoff besteht und
- das Axialgelenk durch Kaltverformung eines zunächst zylindrischen Teils des Gehäuses (1) um die Gelenkkugel (4) mit der zwischen Gehäuse (1) und Gelenkkugel (4) angeordneten Lagerschale (6; 6.1, 6.2) hergestellt wird und dabei das ebenfalls zunächst zylindrische Teil (6.2) der Lagerschale (6) nach der Gelenkmontage der Außenkontur der Gelenkkugel (4) angepaßt ist.

2. Axialgelenk gemäß einem der Anspruch 1, **dadurch gekennzeichnet, daß** zwischen der Lagerschale (6; 6.1, 6.2) und dem Gehäuse (1) ein Dämpfungsring (7) vorgesehen ist.

3. Axialgelenk gemäß Anspruch 2, **dadurch gekennzeichnet, daß** der kleinste Innendurchmesser des Dämpfungsringes (7) kleiner ist als der Außendurchmesser der Gelenkkugel (4).

4. Axialgelenk gemäß einem der Ansprüche 2-3, **dadurch gekennzeichnet, daß** der Dämpfungsring aus einem Elastomer, vorzugsweise Gummi besteht.

5. Axialgelenk gemäß einem der vorstehend genannten Ansprüche, **dadurch gekennzeichnet, daß** an dem Gehäuse (1) ein Gehäusezapfen (8) vorgesehen ist.

6. Axialgelenk gemäß Anspruch 5, **dadurch gekennzeichnet, daß** der Gehäusezapfen (8) gegenüberliegend zur Öffnung (2) des Gehäuses (1) vorgesehen ist.

7. Axialgelenk gemäß einem der vorstehend genannten Ansprüche, **dadurch gekennzeichnet, daß** der Innenraum (9) des Gehäuses (1) mindestens einen ebenen Abschnitt aufweist.

8. Axialgelenk gemäß einem der vorstehend genannten Ansprüche, **dadurch gekennzeichnet, daß** der Innenraum (9) des Gehäuses (1) mindestens einen konischen Abschnitt aufweist.

9. Axialgelenk gemäß einem der vorstehend genannten Ansprüche, **dadurch gekennzeichnet, daß** der Innenraum (9) des Gehäuses (1) mindestens einen zylindrischen Abschnitt aufweist.

10. Axialgelenk gemäß einem der vorstehend genannten Ansprüche, **dadurch gekennzeichnet, daß** der Innenraum (9) des Gehäuse (1) mindestens einen im wesentlichen sphärischen Abschnitt aufweist.

11. Axialgelenk gemäß einem der vorstehend genannten Ansprüche, **dadurch gekennzeichnet, daß** die Gelenkkugel (4) des Kugelzapfens (3) auf der, dem Zapfen (5) gegenüberliegenden Seite eine Abplattung aufweist und im Bereich der Abplattung (11) ein Hohlraum (12) zwischen Lagerschale (6; 6.1, 6.2) und Gelenkkugel (4) vorgesehen ist.

12. Axialgelenk gemäß einem der vorstehend genannten Ansprüche, **dadurch gekennzeichnet, daß** der zunächst zylindrische Teil der Kunststofflagerschale (6.2) aus einem Kunststoff/Metall-Verbundwerkstoff besteht.

13. Verfahren zur Herstellung eines Axialgelenkes mit den folgenden Verfahrensschritten:
- einsetzen der zwei Teile (6.1, 6.2) einer, zu einem wesentlichen Teil zylindrisch geformten und im wesentlichen aus Kunststoff bestehenden zweiteiligen Lagerschale (6) in ein ebenfalls zu einem wesentlichen Teil zylindrisches, metallisches und einstückiges Gehäuse (1), das auf einer Seite eine Öffnung (2) aufweist,
- einsetzen einer, vorzugsweise metallischen Gelenkkugel (4) eines Kugelzapfens (3) in den Hohlraum der Lagerschale (6; 6.1, 6.2),
- kaltverformen eines wesentlichen, zylindrischen Teils des Gehäuses (1), so daß sich ein wesentlicher Abschnitt (10) des zunächst zylindrischen Teils der Lagerschale (6.2) und des zunächst zylindrischen Teils des Gehäuses (1) der Außenkontur der Gelenkkugel (4) anpaßt.

14. Verfahren gemäß Anspruch 13, **dadurch gekennzeichnet, daß** die zweiteilige Lagerschale (6.1, 6.2) zu einem Teil aus einem vor der Verformung zylindrischen Kunststoff/Metall-Werkstoff besteht.

## Claims

1. Axial joint preferably for chassis construction, in particular for steering and gear-shift assembly construction, comprising:
- a metal, integrally constructed housing (1) having an opening (2) and an interior (9),
- a ball pivot (3), which comprises a joint ball (4) and a pivot (5), wherein the joint ball (4) is for the most part enclosed by the housing (1) and in the transition region between joint ball (4) and pivot (5) a pivot neck having a reduced diameter relative to the pivot (5) is provided and the pivot (5) projects through the one opening (2) of the housing, wherein after assembly of the joint the diameter of the joint ball (4) is far greater than the diameter of the opening (2) of the housing (1) and the latter diameter is far smaller than the axial extension of the pivot neck,
**characterized in that**
- a two-part bearing shell (6; 6.1, 6.2) made substantially of plastics material is disposed between the housing (1) and the joint ball (4),
- at least one of the parts (6.2) of said bearing shell (6) is made of a plastics/metal composite material and
- the axial joint is manufactured by cold forming an initially cylindrical part of the housing (1) around the joint ball (4) plus the bearing shell (6; 6.1, 6.2), which is disposed between housing (1) and joint ball (4), and in so doing the likewise initially cylindrical part (6.2) of the bearing shell (6) is adapted after assembly of the joint to the external contour of the joint ball (4).

2. Axial joint according to claim 1, **characterized in that** a damping ring (7) is provided between the bearing shell (6; 6.1, 6.2) and the housing (1).

3. Axial joint according to claim 2, **characterized in that** the smallest inside diameter of the damping ring (7) is smaller than the outside diameter of the joint ball (4).

4. Axial joint according to one of claims 2-3, **characterized in that** the damping ring is made of an elastomer, preferably rubber.

5. Axial joint according to one of the previously described claims, **characterized in that** a housing pivot (8) is provided on the housing (1).

6. Axial joint according to claim 5, **characterized in that** the housing pivot (8) is provided opposite the opening (2) of the housing (1).

7. Axial joint according to one of the previously described claims, **characterized in that** the interior (9) of the housing (1) comprises at least one flat portion.

8. Axial joint according to one of the previously described claims, **characterized in that** the interior (9) of the housing (1) comprises at least one conical portion.

9. Axial joint according to one of the previously described claims, **characterized in that** the interior (9) of the housing (1) comprises at least one cylindrical portion.

10. Axial joint according to one of the previously described claims, **characterized in that** the interior (9) of the housing (1) comprises at least one substantially spherical portion.

11. Axial joint according to one of the previously described claims, **characterized in that** the joint ball (4) of the ball pivot (3) has at the opposite side to the pivot (5) a flattened portion and in the region of the flattened portion (11) a cavity (12) is provided between bearing shell (6; 6.1, 6.2) and joint ball (4).

12. Axial joint according to one of the previously described claims, **characterized in that** the initially cylindrical part of the plastic bearing shell (6.2) is made of a plastics/metal composite material.

13. Method of manufacturing an axial joint having the following method steps:
- inserting the two parts (6.1, 6.2) of a, to a substantial extent, cylindrically shaped two-part plastic bearing shell (6) made substantially of plastics material into a likewise, to a substantial extent, cylindrical metal and integral housing (1), which has an opening (2) at one end,
- inserting a preferably metal joint ball (4) of a ball pivot (3) into the cavity of the bearing shell (6; 6.1, 6.2),
- cold forming a substantial, cylindrical part of the housing (1) so that a substantial portion (10) of the initially cylindrical part of the bearing shell (6.2) and of the initially cylindrical part of the housing (1) adapts to the external contour of the joint ball (4).

14. Method according to claim 13, **characterized in that** the two-part bearing shell (6.1, 6.2) in part consists of a, prior to forming, cylindrical plastics/metal material.

## Revendications

1. Articulation axiale, de préférence pour la construction automobile, en particulier pour la construction de directions et de boites de vitesses, constituée de :
- un boîtier (1) métallique réalisé d'une seule pièce avec ouverture (2) et un volume intérieur (9),
- un pivot à rotule (3) qui comporte une rotule d'articulation (4) et un pivot (5), la rotule d'articulation (4) étant enfermée en majeure partie par le boîtier (1), et un col de pivot, de diamètre réduit par rapport au pivot (5), étant prévu dans la zone de transition entre la rotule d'articulation (4) et le pivot (5), et le pivot (5) ressortant à travers une ouverture de boîtier, après montage de l'articulation, le diamètre de la rotule d'articulation (4) étant sensiblement supérieur au diamètre de l'ouverture (2) du boîtier (1), et ce dernier étant sensiblement inférieur à l'étendue axiale du col de pivot,
**caractérisée en ce que** :
- une coquille de coussinet (6 ; 6.1, 6.2) en deux parties, essentiellement constituée d'une matière plastique, est disposée entre le boîtier (1) et la rotule d'articulation (4),
- au moins l'une des parties (6.2) de cette coquille de coussinet (6) est réalisée dans une matière composite, matière plastique/métal, et
- l'articulation axiale est réalisée par déformation à froid d'une partie d'abord cylindrique du boîtier (1) autour de la rotule d'articulation (4), avec la coquille de coussinet (6 ; 6.1, 6.2) disposée entre le boîtier (1) et la rotule d'articulation (4), et, ce faisant, la partie (6.2) également d'abord cylindrique de la coquille de coussinet (6) est adaptée, après montage de l'articulation, au contour extérieur de la rotule d'articulation (4).

2. Articulation axiale selon la revendication 1, **caractérisée en ce qu'**une bague d'amortissement (7) est prévue entre la coquille de coussinet (6 ; 6.1, 6.2) et le boîtier (1).

3. Articulation axiale selon la revendication 2, **caractérisée en ce que** le plus petit diamètre inférieur de la bague d'amortissement (7) est inférieur au diamètre extérieur de la rotule d'articulation (4).

4. Articulation axiale selon l'une des revendications 2 ou 3, **caractérisée en ce que** la bague d'amortissement est réalisée dans un élastomère, de préférence du caoutchouc.

5. Articulation axiale selon l'une des revendications précédentes, **caractérisée en ce qu'**un tenon de boîtier (8) est prévu sur le boîtier (1).

6. Articulation axiale selon la revendication 5, **caractérisée en ce que** le tenon de boîtier (8) est prévu en face de l'ouverture (2) du boîtier (1).

7. Articulation axiale selon l'une des revendications précédentes, **caractérisée en ce que** le volume intérieur (9) du boîtier (1) comporte au moins une partie plane.

8. Articulation axiale selon l'une des revendications précédentes, **caractérisée en ce que** le volume intérieur (9) du boîtier (1) comporte au moins une partie conique.

9. Articulation axiale selon l'une des revendications précédentes, **caractérisée en ce que** le volume intérieur (9) du boîtier (1) comporte au moins une partie cylindrique.

10. Articulation axiale selon l'une des revendications précédentes, **caractérisée en ce que** le volume intérieur (9) du boîtier (1) comporte au moins une partie sensiblement sphérique.

11. Articulation axiale selon l'une des revendications précédentes, **caractérisée en ce que** la rotule d'articulation (4) du pivot à rotule (3) présente une partie aplatie sur le côté opposé au pivot (5), et une cavité (12) est prévue dans la zone de la partie aplatie (11), entre la coquille de coussinet (6 ; 6.1, 6.2) et la rotule d'articulation (4).

12. Articulation axiale selon l'une des revendications précédentes, **caractérisée en ce que** la partie d'abord cylindrique de la coquille de coussinet en matière plastique (6.2) est réalisée dans une matière composite matière plastique/métal.

13. Procédé de fabrication d'une articulation axiale comportant les étapes de procédé suivantes :
- insérer les deux parties (6.1, 6.2) d'une coquille de coussinet (6) en deux parties cylindriques pour une partie essentielle et essentiellement en matière plastique, dans un boîtier (1) métallique et d'une seule pièce, également cylindrique pour une partie essentielle, lequel présente une ouverture (2) sur un côté,
- insérer une rotule d'articulation (4), de préférence métallique, d'un pivot à rotule (3) dans la cavité de la coquille de coussinet (6 ; 6.1, 6.2),
- déformer à froid une partie sensiblement cylindrique du boîtier (1), de manière qu'une portion (10) essentielle de la partie d'abord cylindrique de la coquille de coussinet (6.2) et de la partie d'abord cylindrique du boîtier (1) s'adapte au contour extérieur de la rotule d'articulation (4).

14. Procédé selon la revendication 13, **caractérisé en ce que** la coquille de coussinet (6.1, 6.2) en deux parties est constituée pour une part d'un matériau matière plastique/métal, cylindrique avant déformation.
